# EUROPÄISCHE PATENTSCHRIFT

(11) **EP 1 512 511 B1**
(45) Veröffentlichungstag und Bekanntmachung des Hinweises auf die Patenterteilung: **09.01.2008**
(21) Anmeldenummer: 04026523.3
(22) Anmeldetag: 18.07.2002
(51) Int. Cl.: B29C 45/16, B29C 45/04, B29C 45/17

(54) **Formschliessvorrichtung für eine Spritzgiessmaschine**
Mould closing device for an injection moulding machine
Dispositif de fermeture de moule pour une machine à mouler par injection

(30) Priorität: 03.08.2001 DE 10138087
(43) Veröffentlichungstag der Anmeldung: 09.03.2005
(62) Teilanmeldung aus: 02767225.2
(73) Patentinhaber: KrausMaffei Technologies GmbH, 80997 München (DE)
(72) Erfinder: Wohlrab, Walter, 91781 Weissenburg (DE); Wobbe, Hans, Dr., 82211 Herrsching (DE)
(74) Vertreter: Wilhelm, Ludwig

(56) Entgegenhaltungen:
- WO-A-00/12284
- DE-A- 2 426 883
- DE-U- 29 611 733
- PATENT ABSTRACTS OF JAPAN Bd. 18, Nr. 650 (M-1719), 9. Dezember 1994 (1994-12-09) -& JP 06 254906 A (MITSUBISHI HEAVY IND LTD), 13. September 1994 (1994-09-13) -& DATABASE WPI Week 199441 Derwent Publications Ltd., London, GB; AN 1994-329476 XP002219567 & JP 06 254906 A 13. September 1994 (1994-09-13)
- DATABASE WPI Section Ch, Week 197813 Derwent Publications Ltd., London, GB; Class A32, AN 1978-24150A XP002324684 -& JP 53 016074 A (JAPAN STEEL WORKS LTD) 14. Februar 1978 (1978-02-14)

## Beschreibung

Die Erfindung betrifft eine Formschließvorrichtung einer Spritzgießmaschine von der im Oberbegriff des Patentanspruchs 1 angegebenen Art.

Aus der GB 2 300 142 ist eine Formschließvorrichtung bekannt, bei der die beiden äußeren Formaufspannplatten jeweils aus einer maschinenrahmenfesten Formaufspannplatte und einer verschieblich am Maschinenrahmen abgestützten Formaufspannplatte bestehen. Das mittlere Formträgerelement ist dabei über einen Tragrahmen ebenfalls verschieblich am Maschinenrahmen abgestützt. Aufgrund der Verfahrbarkeit des im Tragrahmen drehbar angeordneten mittleren Formträgerelements ist dieses Bauelement verhältnismäßig instabil, so daß in der Regel nur Werkzeughälften mit geringem Gewicht auf den Formaufspannflächen des drehbaren Formträgerelements angeordnet werden können. Da das mittlere Formträgerelement und die bewegliche äußere Formaufspannplatte zwei hintereinander geschaltete verschiebliche Formhaltevorrichtungen darstellen, addieren sich deren Toleranzen auf und ergeben somit in Bezug auf die ruhende, maschinenrahmenfeste äußere Formaufspannplatte eine Formschließeinheit mit geringer Genauigkeit und schwer einzuhaltender Plattenparallelität.

Auch aus der DE 197 33 667 ist eine Formschließeinheit mit einer feststehenden und einer beweglichen Formaufspannplatte und einem in relativ zu der beweglichen Aufspannplatte verschieblichen Trägerblöcken gelagerten und um eine vertikale Achse drehbaren Formhälftenträger bekannt. Die bewegliche Formaufspannplatte und der Formhälftenträger können zu der feststehenden Formaufspannplatte hinbewegt und während eines Einspritzvorganges von thermoplastischem Kunststoff ein Schließdruck ausgeübt werden. Hierbei ergeben sich die bereits bei der Beschreibung der GB 2 300 142 genannten Nachteile einer relativen Instabilität der Vorrichtung mit großen Toleranzen.

Die DE 36 20 175 beschreibt eine Spritzgießmaschine mit mindestens zwei Plastifizierund Einspritzeinheiten sowie einer feststehenden Formaufspannplatte und einer von feststehenden Holmen geführten verschiebbaren Formaufspannplatte, die jeweils die einen Formhälften von Spritzgießwerkzeugen tragen, und zwischen denen ein um seine Achse drehbarer und in Richtung der feststehenden Holme verschiebbarer prismatischer Kernträgerkörper angeordnet ist, dessen zu seiner Achse parallele Seitenflächen die anderen Formhälften der Spritzgießwerkzeuge aufweisen. Dieser Kernträgerkörper ist selbst nicht auf dem Maschinenbett abgestützt, sondern nur über an der beweglichen Formaufspannplatte verschiebbar gelagerte Holme gehalten. Dies bedeutet, dass nur Kernträgerkörper und ihnen zugeordnete Formhälften zum Einsatz kommen können, die kein großes Gewicht haben. Die Lagerung des Kernträgerkörpers relativ zur beweglichen Formaufspannplatte ohne jegliche Abstützung weder am Maschinenbett noch an den für die Schließbewegung verwendeten Holmen bedingt zudem eine besonders instabile Vorrichtung, mit allen schon bei der Diskussion der GB 2 300 142 geschilderten Nachteilen.

Aus der DE 196 50 854 ist ein Verfahren und eine Vorrichtung zum Herstellen von Mehrschicht-Kunststoffteilen bekannt, wobei ein Kunststoff-Spritzgussteil mit mindestens einer Schicht aus 2-Komponenenten Duroplast beschichtet wird und die beiden Komponenten nacheinander zyklussynchron im selben Werkzeug gespritzt werden. Hierzu wird eine Grundplatte verwendet, die zwei gleiche, nebeneinander angeordnete Werkzeughälften trägt, und die drehbar um eine horizontale Maschinenlängsachse gelagert ist. Den Werkzeughälften gegenüber sind Matrizen von einer Spritzgießmaschine und einer RIM-Vorrichtung angebracht. Nach dem Einspritzen von Thermoplast mit der Spritzgießmaschine wird die Grundplatte um 180° gedreht und im folgenden Zyklus einerseits ein neues Thermosplastteil gespritzt und andererseits das Teil aus dem vorhergehenden Zyklus mit dem 2-Komponenenten Duroplast beschichtet. Der Nachteil bei dieser Vorrichtung besteht einerseits darin, dass beide Kunststoffeinspritzvorrichtungen auf einer Seite der Maschine vorgesehen sind, was erhebliche Probleme beim Stellplatz und beim Bedienen der Kunststoffvorrichtungen mit sich bringt. Zudem ist diese Vorrichtung nur für Kunststoffteile geringerer Größe geeignet, da die Nebeneinanderanordnung der beiden Werkzeughälften sonst nicht möglich ist. Aus der Beschreibung geht weiters nicht hervor, wie eine um die Werkzeuglängsachse drehbare Grundplatte fest mit den Matrizen von Spritzgießmaschine und RIM-Vorrichtung verbunden werden soll, so dass sich die Frage nach der Genauigkeit der Werkzeugpassung und der ausreichenden Aufbringung von Schließdruck aufdrängt.

Aus der nächstkommenden JP 06 254906 A ist eine Formschließvorrichtung bekannt, bei der zwischen zwei äußeren Formaufspannplatten ein mittleres Formträgerelement angeordnet ist, das in einem fest mit dem Maschinenrahmen der Spritzgießmaschine verbundenen Tragrahmen drehbar gelagert ist. Die beiden äußeren Formaufspannplatten sind verschieblich am Maschinenrahmen abegestützt und können mittels Fahrantrieben auf das mittlere Formträgerelement zu- und von diesem wegbewegt werden. Der Tragrahmen ist in geschlossener Bauweise ausgeführt, was sich positiv auf dessen Stabilität auswirkt, was aber den Nachteil hat, dass der Zugang zum Formträgerelement erschwert ist.

Der Erfindung liegt daher die Aufgabe zugrunde, unter Verwendung einfacher Mittel eine Formschließvorrichtung zu schaffen, die einerseits eine vergleichsweise hohe Stabilität aufweist und die andererseits gleichzeitig eine verbesserte Zugänglichkeit zu den Formen bietet.

Die Lösung dieser Aufgabe erfolgt durch eine Formschließvorrichtung mit den Merkmalen des Patentanspruchs 1; die weiteren Patentansprüche betreffen weitere Ausgestaltungen der Erfindung.

Bei der erfindungsgemäßen Ausgestaltung des Tragrahmens als ortsfester, fest mit dem Maschinenrahmen verbundener und im wesentlichen C-förmiger Tragrahmen mit einer zu einer Seite hin gerichteten Öffnung kann zum einen das mittlere Formträgerelement in einer massiven und dementsprechend stabilen Dreheinrichtung gelagert werden und zum anderen ist das Formträgerelement auf der offenen Seite leicht zugänglich, beispielsweise zum Einlegen von zu umspritzenden Einlegeteilen, zum Entnehmen von fertigen Formteilen oder für sonstige Bearbeitungsschritte.

Ein weiterer Vorteil liegt darin, dass die Werkzeugaufspannflächen für den Werkzeugwechsel oder für Wartungsarbeiten zum offenen Bereich des Tragrahmens geschwenkt werden können.

Vorzugsweise sind die Säulen der Formschließeinheit an einem Ende in einer zu einer der äußeren Formaufspannplatten parallelen Abstützplatte befestigt und durchsetzen am anderen Ende die andere äußere Formaufspannplatte und werden durch sägezahnförmig ineinandergreifende Elemente hinter der Formaufspannplatte verriegelt. Dabei ist es besonders vorteilhaft, wenn die Abstützplatte und die zugeordnete äußere Formaufspannplatte eine Sandwichplatte mit zwischenliegenden hydraulischen Druckkolben bilden. Diese Plattenanordnung zeichnet sich durch eine sehr kurze Bauweise aus und stellt ein besonders steifes System dar, da nur die zur Erzeugung des Schließdruckes erforderliche Hydraulikölmenge notwendig ist. Größere, zu hoher Kompressibilität neigende Hydraulikölmengen können dabei vermieden werden oder werden nur zu der von der Schließdruckerzeugung funktionell entkoppelten Durchführung der Bewegungsantriebe (Schließen, Losreißen und Öffnen) verwendet. Die nach der Erfindung ohnehin gegebene hohe Steifigkeit der Formschließvorrichtung wird durch die Verwendung des vorbeschriebenen Zweiplatten-Schließsystems mit zwischenliegender, maschinenrahmenfest gelagerter mittleren Formträgereinheit somit noch erheblich gesteigert. Eine derartige Formschließeinheit ist daher zur Herstellung von großen Mehrkomponenten-Kunststoffteilen, die eine hohe Maschinenpräzision erfordern, wie z.B. Automobilscheiben, Innenverkleidungen von Automobilen oder mehrschalige Behälter, besonders geeignet.

In einer anderen vorteilhaften Ausgestaltung der Erfindung sind die Säulen auf der einen Seite in der einen äußeren Formaufspannplatte befestigt und auf der anderen Seite als Kolben ausgebildet, die in hydraulischen, mit der anderen äußeren Formaufspannplatte fest verbundenen Zylindern reversierbar geführt wird. Auch dieses Zweiplatten-Schließsystem mit zwischenliegender maschinenrahmenfest gelagerter mittlerer Formträgereinheit zeichnet sich durch eine kurze Bauweise und hohe Steifigkeit aus.

Die äußeren Formaufspannplatten können für die Herstellung von mehrschichtigen Spritzgussteilen mit Einspritzaggregaten gekoppelt sein. In anderen Anwendungsfällen können anstelle der Einspritzaggregate RIM-Vorrichtungen wie PUR-Schäumanlagen oder ähnliche Vorrichtungen vorgesehen sein, um Mehrkomponenten-Kunststoffteile im RIM-Verfahren herzustellen. Besonders bevorzugt ist eine Mischbestückung, bei der ein Grundbauteil aus einem Thermoplast von einem Einspritzaggregat gespritzt wird und mit einer Schicht aus 2-Komponenenten Duroplast, insbesondere Polyurethan, im RIM-Verfahren beschichtet wird oder umgekehrt.

Bei einem als Würfel ausgebildeten Formträgerelement mit vier Werkzeughälften kann bei dem C-förmigen Tragrahmen, bezogen auf eine der vier Werkzeughälften des Formträgerelementes, im ersten Takt das Grundbauteil gespritzt werden. Im zweiten Takt kann dieses Bauteil abkühlen. Im dritten Takt wird das Grundbauteil zum Zweikomponenten-Kunststoffteil vervollständigt. Im vierten Takt befindet sich die Werkzeughälfte mit dem fertigen Zweikomponenten-Kunststoffteil an der offenen Stelle des C-förmigen Tragrahmens und kann während der vierten Taktzeit entnommen werden. Da somit der Vorgang der Entnahme während des vierten Taktes abläuft, kann die Zykluszeit erheblich verkürzt werden. Ein weiterer Vorteil besteht darin, daß die Werkzeughälfte nach der Entnahme des fertigen Zweikomponenten-Kunststoffteils vor Ablauf der vierten Taktzeit noch mit Einlegeteilen, wie z.B. metallischen Schraubhülsen oder einem Kunststoffteil bestückt werden kann. Alternativ kann der C-förmige Rahmen auch so eingesetzt werden, dass sich das Grundbauteil im zweiten Takt an der offenen Seite des Rahmens befindet, und so ein zwischengelagerter Bearbeitungsschritt im zweiten Takt durchgeführt werden kann, der ansonsten noch im ersten Takt hätte erfolgen müssen. Ein solcher Bearbeitungsschritt, der normalerweise erst bei ausreichend abgekühltem Kunststoffteil erfolgen kann, ist beispielsweise die Oberflächenbehandlung des Grundbauteils, wodurch der im folgenden Schritt angespritzte Kunststoff eine bessere Verbindung mit diesem eingehen kann. Ein solcher Bearbeitungsschritt ist bei der Verbindung eines Thermoplast-Grundbauteils mit einer 2-Komponenenten Duroplasthaut, insbesondere einer Polyurethanhaut oder ähnlichem von Vorteil und wird z.B. von einem seitlich der Formschließvorrichtung stehenden Bedienroboter durchgeführt. Der Vorteil der Verkürzung der Zykluszeit ergibt sich bei einem Formträgerelement mit vier oder sechs Werkzeughälften.

Ausführungsformen der Erfindung werden anhand der beigefügten Zeichnungen erläutert.

Es zeigen
- Fig. 1: die Seitenansicht auf eine Spritzgießmaschine mit erfindungsgemäßer Formschließeinheit,
- Fig. 2: im vergrößerten Maßstab die Schnittansicht gemäß der Schnittlinie II - II in Fig. 1,
- Fig. 3: die Seitenansicht auf eine Spritzgießmaschine mit erfindungsgemäßer Formschließeinheit gemäß der ersten Ausführungsform mit RIM-Vorrichtung,
- Fig. 4: die schematische Draufsicht auf die erfindungsgemäße Formschließeinheit mit einer Einspritzdüse und einem Mischkopf,
- Fig. 5: die schematische Draufsicht auf die erfindungsgemäße Formschließeinheit mit zwei Mischköpfen,
- Fig. 6: die Seitenansicht einer weiteren Spritzgießmaschine mit einer erfindungsgemäßen Formschließeinheit,
- Fig. 7: die Schnittansicht gemäß der Schnittlinie V-V in Fig. 6 und
- Fig. 8: die perspektivische Ansicht der Spritzgießmaschine nach Fig. 6.

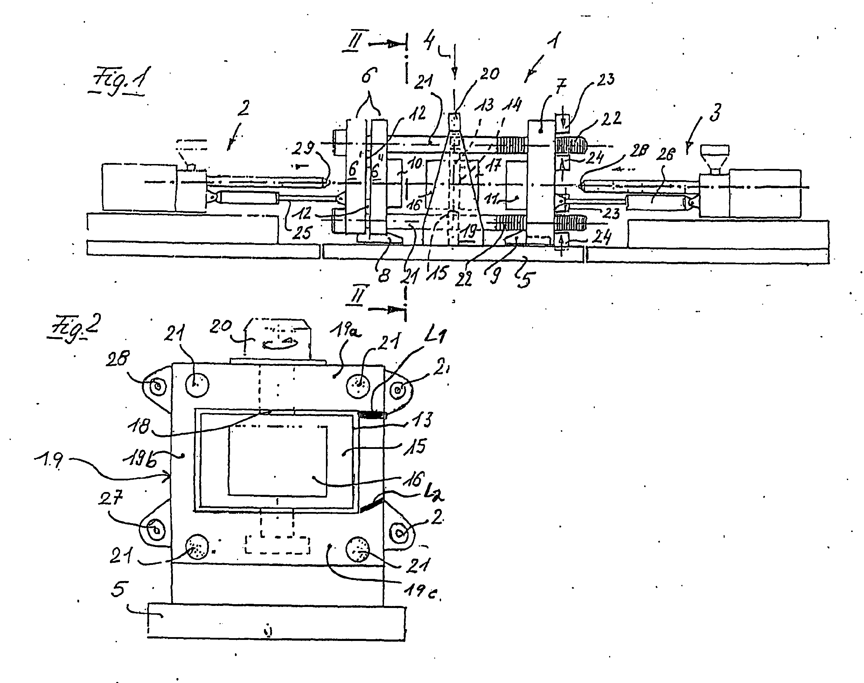

Die Spritzgießmaschine gemäß Fig. 1 umfasst eine Formschließeinheit 1 und zwei Einspritzaggregate 2 und 3. Mit dem Pfeil 4 ist lediglich die Spritzachse eines dritten möglichen Einspritzaggregates dargestellt, das in sogenannter T-Anordnung an der Spritzgießmaschine vorgesehen werden kann.

Die Formschließeinheit 1 besteht aus einem Maschinenrahmen 5, auf dem zwei äußere Formaufspannplatten 6 und 7 über Gleitschuhe 8 und 9 verschieblich abgestützt sind. Die Formaufspannplatten 6 und 7 tragen jeweils eine Werkzeughälfte 10 und 11. Die in Fig. 1 links dargestellte Formaufspannplatte 6 besteht aus einer sogenannten Sandwichplatte, die sich aus zwei in sehr geringem Parallelabstand angeordneten Platten zusammensetzt, von denen die eine Platte eine Abstützplatte 6' und die andere Platte die Formträgerplatte 6" ist. Zwischen der Abstützplatte 6' und der Formträgerplatte 6" befinden sich vier hydraulische Druckkolben 12, von denen in der Zeichnung nur die zwei vorderen Druckkolben zu sehen sind. Zwischen der Abstützplatte 6' und der Formträgerplatte 6" kann auch ein Kniehebelsystem angeordnet sein.

Zwischen den beiden äußeren Formaufspannplatten befindet sich ein mittleres Formträgerelement 13, das zwei gegenüberliegende Formaufspannflächen 14 und 15 aufweist, auf denen jeweils eine linke und eine rechte mittige Werkzeughälfte 16 und 17 befestigt ist. Das in der Fig. 1 dargestellte Formträgerelement 13 ist plattenförmig und weist somit zwei Aufspannflächen 14 und 15 auf. Grundsätzlich kann das Formträgerelement auch als Würfel mit vier Formaufspannflächen ausgebildet sein.

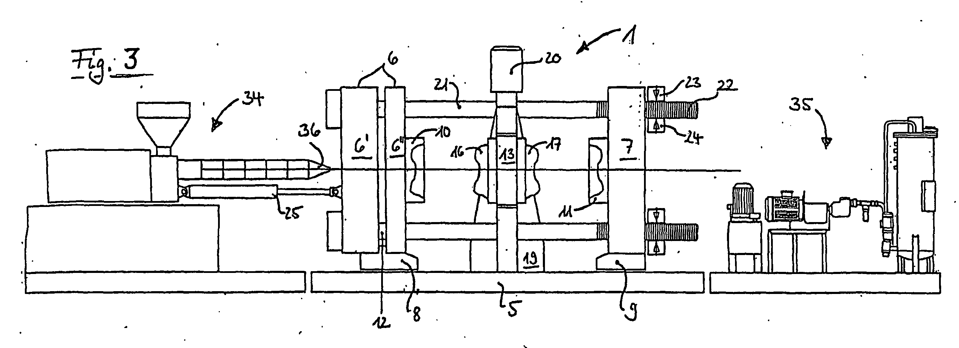

Das Formträgerelement 13 ist mit einer senkrecht stehenden Drehachse 18 in einem fest mit dem Maschinenrahmen 5 verbundenen Tragrahmen 19 gelagert. Wie in Figur 2 mit den Linien L1 und L2 angedeutet, kann der Tragrahmen 19 als im wesentlichen C-förmiger Tragrahmen ausgebildet sein, mit einem oberen horizontalen Schenkel 19a, einem unteren horizontalen Schenkel 19c und einem diese Schenkel miteinander verbindendes und mit diesen jeweils einen rechten Winkel einschließendes vertikales Tragrahmenteil 19b. Zwischen dem oberen Schenkel 19a und dem unteren Schenkel 19c ist der Tragrahmen 19 im Bereich zwischen den beiden Linien L1 und L2 offen. Am Tragrahmen 19 befindet sich ein Drehantrieb 20, mit dem das Formträgerelement 13 mit den beiden mittigen Werkzeughälften 16 und 17 jeder der beiden äußeren Werkzeughälften 10 und 11 zugeordnet werden kann.

Die beiden äußeren Formaufspannplatten 6 und 7 sind durch vier Säulen 21 miteinander verbunden. In der linken äußeren Formaufspannplatte 6 sind die Säulen 21 in der Abstützplatte befestigt. Die Säulen 21 durchsetzen die rechte äußere Formaufspannplatte 7 und sind hinter dieser verriegelt. Das Verriegelungssystem besteht aus im Endbereich der Säulen 21 ausgebildeten sägezahnförmigen Rillen 22 in die komplementär sägezahnförmige Rillen von zwei gegeneinander bewegbaren Halbschalen 23 und 24 sperrklinkenartig einfahrbar sind. Die Säulen 21 durchsetzen den Tragrahmen 19 in Gleitführungen.

Die Einspritzaggregate 2 und 3 sind mit den äußeren Formaufspannplatten 6 und 7 über hydraulische Stellelemente 25 und 26 gekoppelt, mit denen die Einspritzdüsen 29 an den Formaufspannplatten 6 und 7 in Spritzstellung positionierbar sind.

Die Schnittdarstellung gemäß Fig. 2 zeigt den auf dem Maschinenrahmen 5 befestigten Tragrahmen 19, der von den Säulen 21 durchsetzt ist. Innerhalb des Tragrahmens 19 ist das Formträgerelement 13 drehbar gelagert auf dessen Formaufspannfläche 14 die linke mittige Werkzeughälfte 16 befestigt ist. Die Drehachse 18 des Formträgerelementes 13 ist mit dem Drehantrieb 20 gekoppelt. Am äußeren Rand des Tragrahmens 19 sind Halterungen für hydraulische Stellantriebe 27 und 28 angeordnet (in Fig. 1 nicht dargestellt), mit denen die äußeren Formaufspannplatten 6 und 7 zum maschinenrahmenfesten Tragrahmen zu- und weg bewegt werden können. Die hydraulischen Stellantriebe 27 und 28 dienen dabei zur Durchführung der Werkzeugschließbewegung , mit der die Werkzeughälfte 10 der linken äußeren Formaufspannplatte 6 in Schließstellung mit der linken mittigen Werkzeughälfte 16 des mittleren Formträgerelements 13 gebracht werden kann. In gleicher Weise und gleichzeitig werden die Werkzeughälften 11 und 17 in Schließstellung gebracht. Das Heranfahren der beiden äußeren Formaufspannplatten 6 und 7 an das maschinenrahmenfeste Formträgerelement 13 erfolgt bei geöffnetem Verriegelungssystem, das nach Vollendung der Schließbewegung sofort in Sperrstellung gebracht wird, in der sich die beiden Halbschalen 23 und 24 im Eingriff mit den sägezahnförmigen Rillen 22 der Säulen 21 befinden. Die Bewegung in Sperrstellung ist in Fig. 1 durch die Pfeile an den Halbschalen 23 und 24 angegeben.

Unmittelbar nach der Verriegelung erfolgen die Schließdruckerzeugung über die Druckkolben 12 und ein erster Spritzvorgang über die an die äußeren Formaufspannplatten 6 und 7 angedockten Einspritzaggregate 2 und 3.

Nach Vollendung des ersten Spritzvorgangs wird das Verriegelungssystem gelöst und die hydraulischen Stellantriebe 27 und 28 bewirken zunächst das Losreißen der geschlossenen Werkzeughälften 10, 12, 16, 17 und im weiteren ein Wegfahren der äußeren Formaufspannplatten 6 und 7 von dem maschinenrahmenfesten Formträgerelement 13 bzw. dem Tragrahmen 19.

Anschließend wird das Formträgerelement 13 um 180° gedreht, so daß den äußeren Werkzeughälften 10 und 11 die gewendeten mittigen Werkzeughälften 16 und 17 gegenüberliegen. Mit diesen neuen Werkzeughälften-Paarungen werden die im ersten Spritzgießvorgang hergestellten Teil-Spritzgießartikel in einem nachfolgenden zweiten Spritzgießvorgang zum fertigen Zweikomponenten-Kunststoffteil vervollständigt.

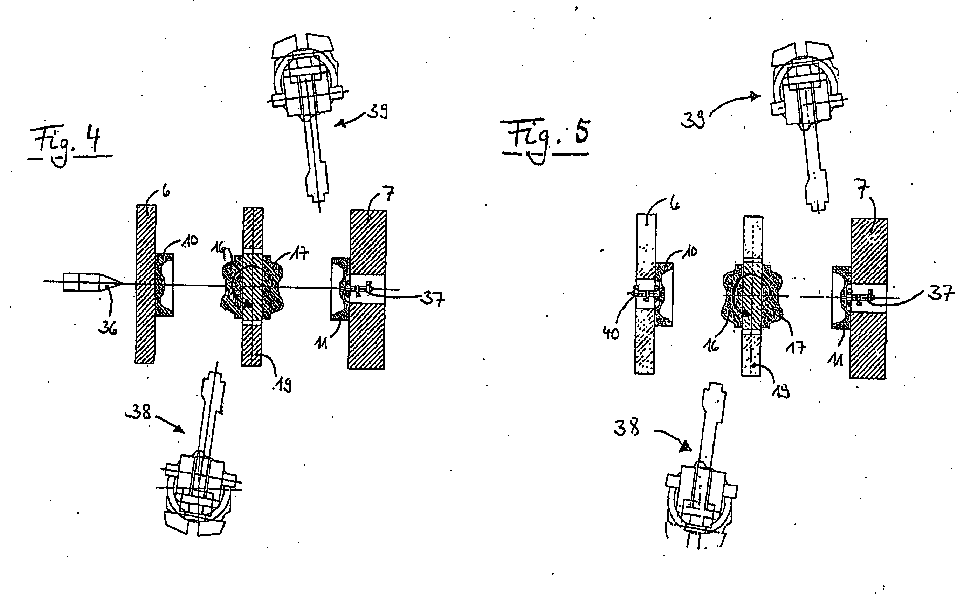

In den Figuren 3 bis 5 sind zwei weitere Einsatzmöglichkeiten für eine Formschließeinheit 1 mit einem im wesentlichen C-förmigen Tragrahmen 19 aufgezeigt, wobei gleiche Elemente gleiche Bezugszeichen behalten. In Fig. 3 ist die Formschließeinheit 1 dargestellt; hier ist an die Abstützplatte 6' von links über ein hydraulisches Stellelement 25 ein Einspritzaggregat 34 gekoppelt. Eine zugeordnete Einspritzdüse 36 ist an der Formaufspannplatte 6 in Spritzstellung positionierbar. Auf der rechten Seite der Formschließeinheit 1 ist eine RIM-Vorrichtung 35 (RIM: Reaction Injection Molding) vorgesehen, wie sie z.B. bei der Verarbeitung von Polyurethan (PUR) verwendet wird. Diese Vorrichtung wird hier nicht genauer beschrieben, kann aber als bekannt vorausgesetzt werden und umfasst im wesentlichen Förder- und Dosiermechanismen für die einzelnen zu verarbeitenden Chemikalien, wie Polyol, Polyisocyanat und mögliche Zusätze. Über einen in Fig. 4 nicht dargestellten Mischkopf ist die RIM-Vorrichtung an die Formschließeinheit 1 gekoppelt.

In Fig. 4 ist die Anordnung gemäß Fig. 3 schematisch in der Draufsicht dargestellt, wobei zwei mögliche Handling-Roboter 38, 39 jeweils seitlich neben den geöffneten Werkzeughälften 10, 16 und 11, 17 vorgesehen sind. Hierbei kann es sich um einen Bearbeitungsroboter 38 und einen Entnahmeroboter 39 handeln. Über einen Mischkopf 37 ist die in Fig. 4 nicht gezeigte RIM-Vorrichtung an die rechte Formaufspannplatte 7 gekoppelt, dieser Mischkopf 37 steht in Spritzverbindung mit der rechten äußeren Werkzeughälfte 11. Bei einer Anordnung gemäß Fig. 3 erfolgt die Herstellung des Grundbauteils wie zuvor geschildert. Bei geöffneten Werkzeugen findet sodann eine Oberflächenbehandlung des zuvor gespritzten Grundbauteils statt, die von dem Bearbeitungsroboter 38 vorgenommen wird. Hierauf wird das Formträgerelement 13 um 180° gedreht und die Werkzeughälften werden wieder verschlossen. Im nachfolgenden Schritt wird einerseits auf der linken Seite ein neues Grundbauteil gespritzt, während auf der rechten Seite über den Mischkopf 37 das PUR-Reaktionsgemisch in das Werkzeug eingespritzt wird und eine PUR-Haut auf der Oberfläche des Grundbauteils bildet. Bei der nachfolgenden Öffnung der Werkzeuge kann einerseits das fertige Bauteil von einem Entnahmeroboter 39 oder einer anderen Entnahmevorrichtung entnommen werden, während gleichzeitig die Oberflächenbehandlung des Grundbauteils stattfindet.

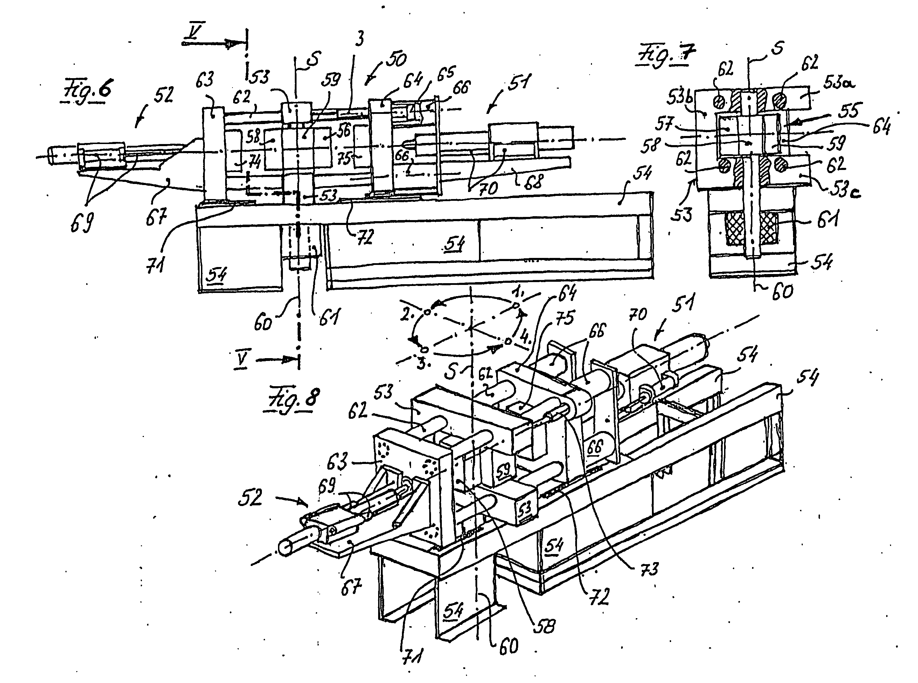

Fig. 5 zeigt schematisch eine ähnliche Anordnung wie Fig. 4, nur ist hier das linke Einspritzaggregat 34 mit Einspritzdüse 36 durch eine weitere nicht dargestellte RIM-Vorrichtung ersetzt worden, die über einen Mischkopf 40 an die linke Formaufspannplatte 6 gekoppelt ist. Mit dieser Anordnung können Mehrkomponenten-Kunststoffteile gefertigt werden, bei denen sowohl das Grundbauteil als auch die Beschichtung aus PUR bestehen, der Herstell-Vorgang verläuft analog.

Als RIM-Vorrichtungen können auch eine oder mehrere PUR-Schäumanlagen vorgesehen werden.

Die Abstützung des Schließdruckes über das Verriegelungssystem gemäß der Ausführungsform nach Fig. 1 stellt ein besonders stabiles und damit höher belastbares System dar, so daß die Formschließeinheit 1 nach Fig. 1 insbesondere für die Herstellung von großen Mehrkomponenten-Kunststoffteilen, die eine hohe Präzision erfordern, geeignet ist.

Die Spritzgießmaschine gemäß den Figuren 6 bis 8 umfasst eine Formschließeinheit 50 und zwei Einspritzaggregate 51 und 52. Die Formschließeinheit 50 besteht aus einer einstückigen äußeren Formaufspannplatte 63, in der Säulen 62 befestigt sind. Die Säulen 62 durchsetzen sowohl den Tragrahmen 53 als auch die rechte äußere Formaufspannplatte 64, die vier Hydraulikzylinder 66 aufweist, in denen die als Kolben 65 ausgebildeten Enden der Säulen 62 reversierbar geführt sind. Mit diesen Kolben-Zylindereinheiten 65, 66 sind einerseits die Fahrbewegungen der Formschließeinheit 50 durchführbar, wie das Öffnen und das Schließen der Werkzeugformhälften. Andererseits kann damit auch der Schließdruck erzeugt werden. Die hierfür erforderliche Druckübersetzereinrichtung ist im Kolben 65 integriert und nicht gesondert dargetellt. Im Gegensatz zur Ausführungsform nach Fig.1 erfolgt auch keine Funktionsaufteilung. Während bei der Formschließeinheit nach Fig.1 der Schließdruck durch die Druckkolben 12 erzeugt wird und die Fahrbewegung (Öffnen, Schließen, Losreißen) von den hydraulischen Stellelementen 25, 26 bewerktstelligt wird, werden beide Hauptfunktionen (Fahrbewegungen und Schließdruckerzeugung) bei der Formschließeinheit 50 von der Kolben-Zylindereinheit 65, 66 durchgeführt.

Der C-förmige Tragrahmen 53 ist mit dem Maschinenrahmen 54 fest verbunden und trägt, drehbar gelagert, ein Formträgerelement 55, auf dem vier mittige Werkzeughälften 56, 57, 58 und 59 aufgespannt sind. Die Drehachse 60 des Formträgerelementes 55 ist in beiden Schenkeln 53a, 53c des C-förmigen Tragrahmens 53 gelagert und ist über einen im Maschinenrahmen 54 angeordneten Drehantrieb 61 taktweise antreibbar. Der C-förmige Tragrahmen 53 wird in Gleitführungen von vier Säulen 62 durchsetzt, die an einem Ende in der linken äußeren Formaufspannplatte 63 befestigt sind und am anderen Ende die rechte äußere Formaufspannplatte 64 in Gleitführungen durchsetzen und mit den Kolben 65 in vier Hydraulikzylindern 65 reversierbar geführt sind. Die beiden äußeren Formaufspannplatten 63 und 64 weisen Halterungen 67 und 68 für die Einspritzaggregate 51 und 52 auf, die mit hydraulischen Stellelementen 69 und 70 an die Einspritz-Durchgangsöffnungen der Formaufspannplatten 63 und 64 heranfahrbar sind.

Die äußeren Formaufspannplatten 63 und 64 sind auf Gleitschienen 71 und 72 auf dem Maschinenrahmen 54 verschieblich abgestützt. Die Verschiebung der äußeren Formaufspannplatten 63 und 64 erfolgt daher über zwei an den Ecken der Formaufspannplatte 64 diagonal gegenüberliegende hydraulische Stellantriebe 73, von denen in den Figuren 7 und 9 nur der obere Stellantrieb sichtbar ist. Die Bewegung der linken äußeren Formaufspannplatte 63 erfolgt über die hydraulische Kolben-Zylindereinheiten 65, 66.

Die vier mittigen Werkzeughälften 56, 57, 58 und 59 sind taktweise mit den auf den beiden äußeren Formaufspannplatten 63 und 64 angeordneten Werkzeughälften 74 und 75 zusammenschließbar.

Der Spritzvorgang wird nachfolgend anhand des taktmäßigen Durchlaufes der mittigen Werkzeughälfte 56 erläutert. Die vier jeweils um 90° versetzten Taktstellungen 1 bis 4 des würfelförmigen Formträgerelements 55 sind in Fig. 8 bezüglich der Schwenkachse S angegeben. Im ersten Takt werden die beiden Werkzeughälften 56 und 75 zusammengeschlossen und es wird ein Grundkörper gespritzt. Im zweiten Takt steht die Werkzeughälfte 55 dem senkrechten Schenkel des C-förmigen Tragrahmens 53 gegenüber. Der zuvor gespritzte Grundkörper kann dabei abkühlen. Im dritten Takt wird die Werkzeughälfte 56 mit der Werkzeughälfte 74 der linken äußeren Formaufspannplatte 63 zusammengeschlossen und der Grundkörper wird zu einem Zweikomponenten-Spritzgießteil vervollständigt. Im vierten Takt wird die Werkzeughälfte 56 in die Öffnung des C-förmigen Tragrahmens 53 geschwenkt. In dieser Stellung kann das fertige Zweikomponenten-Spritzgießteil leicht entnommen werden und die entleerte Werkzeughälfte 56 kann gegebenenfalls anschließend mit Einlegeteilen bestückt werden. Bei diesem Betriebsablauf erfolgt der Vorgang des Entnehmens während der Taktzeit, die von den Vorgängen Schließen, Schließdruckaufbau, Spritzen, Nachdruckphase bestimmt wird. Da hierbei keine Zeitspanne für die Entnahme des Spritzgießteils zu berücksichtigen ist., weil die Entnahme zeitgleich an der offen abgeschwenkten Werkzeughälfte erfolgen kann, kann die Mehrkomponenten-Spritzgießmaschine mit verkürzter Zykluszeit betrieben werden.

Auch bei der Verwendung von einer oder mehreren RIM-Vorrichtungen kann eine Formschließeinheit 50 gemäß Fig. 6 bis 8 mit C-förmigem Tragrahmen 53 vorteilhaft zum Einsatz kommen. In diesem Fall würde die Werkzeughälfte mit dem Grundbauteil im zweiten Takt in die Öffnung des C-förmigen Rahmens 53 geschwenkt, wo das Bauteil zuerst abkühlt und dann eine Oberflächenbehandlung erfährt. Im dritten Takt wird die Werkzeughälfte mit dem Grundbauteil mit der mit der Mischdüse verbundenen Werkzeughälfte zusammengefahren und das Bauteil durch Aufbringen einer PUR-Haut vervollständigt, während auf der anderen Seite des Tragrahmens ein neues Grundbauteil gespritzt wird. Beim nächsten Auffahren wird das fertige Bauteil entnommen und ein neuer Zyklus beginnt. Es kann auch vorgesehen sein, dass das Bauteil im vierten Takt entnommen wird, dies setzt voraus, dass der Platz zwischen dem senkrechten Schenkel 53b des C-förmigen Tragrahmens 53 und dem fertigen Bauteil für den Einsatz einer Entnahmevorrichtung ausreicht. Alternativ kann im zweiten Takt der Bearbeitungsvorgang auf der geschlossenen Seite des C-förmigen Tragrahmens 53 erfolgen, wobei ausreichend Raum für das Bearbeitungsgerät vorhanden sein muss, während im vierten Takt das fertige Bauteil auf der offenen Seite entnommen wird.

Die Verfahrbewegungen für die Formaufspannplatten 6, 7 und 62, 63 der vorbeschriebenen Formschließvorrichtungen 1 und 50 kann hydraulisch oder elektromechanisch über Kugelspindelantriebe erfolgen.

### Bezugszeichenliste

1. Formschließeinheit ( 1. Ausführungsform)
2. Einspritzaggregat
3. Einspritzaggregat
4. mögliches Einspritzaggregat (Pfeil 4)
5. Maschinenrahmen
6. äußere Formaufspannplatte (links) mit Abstützplatte 6' und Formträgerplatte 6"
7. äußere Formaufspannplatte (rechts)
8. Gleitschuh
9. Gleitschuh
10. Werkzeughälfte (links außen)
11. Werkzeughälfte (rechts außen)
12. Druckkolben
13. Formträgerelement
14. Formaufspannfläche
15. Formaufspannfläche
16. mittige Werkzeughälfte, (links)
17. mittige Werkzeughälfte (rechts)
18. Drehachse
19. Tragrahmen mit Schenkeln 19a, 19b und 19c
20. Drehantrieb
21. Säule
22. sägezahnförmige Rillen
23. Halbschale
24. Halbschale
25. hydraulisches Stellelement
26. hydraulisches Stellelement
27. hydraulische Stellantriebe
28. hydraulische Stellantriebe
29. Einspritzdüse
34. Einspritzaggregat
35. RIM-Vorrichtung
36. Einspritzdüse
37. Mischkopf
38. Bearbeitungsroboter
39. Entnahmeroboter
40. Mischkopf
50. Formschließeinheit (2. Ausführungsform)
51. Einspritzaggregat
52. Einspritzaggregat
53. C-förmiger Tragrahmen mit Schenkeln 53a, 53b, und 53c
54. Maschinenrahmen
55. Formträgerelement
56. mittige Werkzeughälfte
57. mittige Werkzeughälfte
58. mittige Werkzeughälfte
59. mittige Werkzeughälfte
60. Drehachse
61. Drehantrieb
62. Säule
63. Formaufspannplatte links
64. Formaufspannplatte rechts
65. Kolben
66. Hydraulikzylinder
67. Halterung
68. Halterung
69. hydraulisches Stellelement
70. hydraulisches Stellelement
71. Gleitschiene
72. Gleitschiene
73. hydraulischer Stellantrieb
74. Werkzeughälfte links
75. Werkzeughälfte rechts

## Patentansprüche

1. Formschließvorrichtung (1, 50) einer Spritzgießmaschine zur Herstellung von aus zwei oder mehreren Kunststoff-Komponenten bestehenden Kunststoffteilen, bei der zwischen zwei äußeren Formaufspannplatten (6, 7, 63, 64) ein mittleres Formträgerelement (13, 55) angeordnet ist, das in jeweils paarweise gegenüberliegender Anordnung zwei oder vier Formaufspannflächen zur Befestigung von zwei oder vier Werkzeughälften aufweist und das mit einer in einem Tragrahmen (19, 53) gelagerten Wendevorrichtung versehen ist, wobei jede Werkzeughälfte des Formträgerelementes (13, 55) mit den Werkzeughälften der äußeren Formaufspannplatten (6, 7, 63, 64) mittels Fahrantrieben und einer Schließdruckeinheit zusammenschließbar ist, wobei der Tragrahmen (19, 53) fest mit dem Maschinenrahmen (5, 54) der Spritzgießmaschine verbunden ist, und wobei die äußeren Formaufspannplatten (6, 7, 63, 64) verschieblich am Maschinenrahmen (5, 54) abgestützt und in Schließstellung der Formschließvorrichtung durch Säulen (21) miteinander verbunden sind,
**dadurch gekennzeichnet,**
**dass** als Tragrahmen (19, 53) ein C-förmiger Tragrahmen (19, 53) mit einer zur Bedienerseite der Spritzgießmaschine gerichteten Öffnung vorgesehen ist.

2. Formschließvorrichtung nach Anspruch 1.
**dadurch gekennzeichnet,**
**dass** der Tragrahmen (19, 53) einen oberen (19a, 53a) und einen unteren (19c, 53c) horizontalen Schenkel sowie ein diese Schenkel (19a, 19c, 53a, 53c) miteinander verbindendes und mit diesen jeweils einen rechten Winkel einschließendes, vertikales Tragrahmenteil (19b, 53b) aufweist.

3. Formschließvorrichtung nach Anspruch 1 oder 2,
**dadurch gekennzeichnet,**
**dass** der Tragrahmen (19, 53) einen unteren auf dem Maschinenrahmen (5, 54) abgestützten, horizontalen Schenkel (19c, 53c) aufweist.

4. Formschließvorrichtung nach einem der Ansprüche 1 bis 3,
**dadurch gekennzeichnet,**
**dass** der Tragrahmen (19, 53) an seinen beiden horizontalen Schenkeln (19a, 19c, 53a, 53c) jeweils von zwei Säulen (21, 62) in Gleitführungen durchsetzt ist, die die beiden äußeren Formaufspannplatten (6, 7, 63, 64) miteinander verbinden.

5. Formschließvorrichtung nach einem der Ansprüche 1 bis 4,
**dadurch gekennzeichnet,**
**dass** zwischen dem maschinenfesten Tragrahmen (19, 53) und den beiden äußeren Formaufspannplatten (6, 7, 63, 64) Stellantriebe (27, 28, 73) zur Durchführung der Öffnungs- und Schließbewegungen angeordnet sind.

6. Formschließvorrichtung nach einem der Ansprüche 1 bis 5,
**dadurch gekennzeichnet,**
**dass** das Formträgerelement (13) plattenförmig mit zwei Formaufspannflächen für zwei mittige Werkzeughälften (16, 17) ausgebildet ist.

7. Formschießvorrichtung nach einem der Ansprüche 1 bis 5,
**dadurch gekennzeichnet,**
**dass** das Formträgerelement (55) würfelförmig mit vier Formaufspannflächen für vier mittige Werkzeughälften (56, 57, 58, 59) ausgestaltet ist.

8. Formschließvorrichtung nach einem der Ansprüche 1 bis 7,
**dadurch gekennzeichnet,**
**dass** mindestens eine Bearbeitungsvorrichtung vorgesehen ist, um Bearbeitungsschritte an dem erzeugten Teil durchzuführen, das sich in der Werkzeughälfte befindet, die zur Öffnung des C-förmigen Tragrahmens (19, 53) orientiert ist.

9. Formschließvorrichtung nach einem der Ansprüche 1 bis 8,
**dadurch gekennzeichnet,**
**dass** am Tragrahmen (19, 53) ein oder mehrere Einspritzaggregate (4) und/oder RIM-Vorrichtungen angeordnet sind, die in Spritzverbindung mit einem oder mehreren der auf dem Formträgerelement (13, 55) befestigten Werkzeughälften bringbar sind.

## Claims

1. A mould closing device (1, 50) of an injection moulding machine for manufacturing plastic parts consisting of two or more plastic components, in which a central mould supporting element (13, 55) is arranged between two outer mould clamping plates (6, 7, 63, 64), which comprises two or four mould clamping surfaces for securing two or four tool halves in a respectively pair-wise opposing arrangement and which is provided with a turning device mounted in a supporting frame (19, 53), wherein each tool half of the mould supporting elements (13, 55) can be closed together with the tool halves of the outer mould clamping plates (6, 7, 63, 64) by means of travelling drives and a closing pressure unit, wherein the supporting frame (19, 53) is firmly connected to the machine frame (5, 54) of the injection moulding machine and wherein the outer mould clamping plates (6, 7, 63, 64) are supported displaceably on the machine frame (5, 54) and are interconnected by pillars (21) in the closed position of the mould closing device, **characterised in that** a C-shaped supporting frame (19, 53) is provided with an opening directed towards the operator side of the injection moulding machine as the supporting frame (19, 53).

2. The mould closing device according to claim 1, **characterised in that** the supporting frame (19, 53) comprises an upper (19a, 53a) and a lower (19c, 53c) horizontal leg and a vertical supporting frame part (19b, 53b) which connects these legs (19a, 19c, 53a, 53c) one to the other and which encloses a right angle with each of these.

3. The mould closing device according to claim 1 or 2, **characterised in that** the supporting frame (19, 53) comprises a lower horizontal leg (19c, 53c) supported on the machine frame (5, 54).

4. The mould closing device according to any one of claims 1 to 3, **characterised in that** the supporting frame (19, 53) is penetrated by two pillars (21, 62) in sliding guides on each of its two horizontal legs (19a, 19c, 53a, 53c) which interconnect the two outer mould clamping plates (6, 7, 63, 64) .

5. The mould closing device according to any one of claims 1 to 4, **characterised in that** adjusting drives (27, 28, 73) for executing the opening and closing movements are arranged between the supporting frame (19, 53) fixed to the machine and the two outer mould clamping plates (6, 7, 63, 64).

6. The mould closing device according to any one of claims 1 to 5, **characterised in that** the mould supporting element (13) is configured as a plate shape with two mould clamping surfaces for two central tool halves (16, 17).

7. The mould closing device according to any one of claims 1 to 5, **characterised in that** the mould supporting element (55) is fitted in a cube shape with four mould clamping surfaces for four central tool halves (56, 57, 58, 59).

8. The mould closing device according to any one of claims 1 to 7, **characterised in that** at least one processing device is provided to carry out processing steps on the part produced which is located in the tool half oriented towards the opening of the C-shaped supporting frame (19, 53).

9. The mould closing device according to any one of claims 1 to 8, **characterised in that** one or a plurality of injection moulding units (4) and/or RIM device are arranged on the supporting frame (19, 53) which can be brought into position for injection with one or more of the tool halves arranged on the mould supporting element (13, 55).

## Revendications

1. Dispositif de fermeture de moule (1, 50) d'une machine de moulage par injection pour la fabrication de pièces en matière plastique à partir de deux composants de matière plastique ou plus, dans laquelle un élément porteur de moule central (13, 56) est disposé entre deux plaques extérieures de montage de moule (6, 7, 63, 64) qui comporte, disposées face à face respectivement par paires, deux ou quatre surfaces de montage de moule pour y fixer deux ou quatre demi-moules et qui est équipé d'un dispositif de renversement s'appuyant par un châssis porteur (19, 53), chaque demi-moule de l'élément porteur de moule (13, 55) pouvant être assemblé aux demi-moules des plaques extérieures de montage de moule (6, 7, 63, 64) par des propulsions de déplacement et une unité à pression de fermeture, le cadre porteur (19, 53) étant relié fixement au châssis de machine (5, 54) de la machine de moulage par injection et les plaques extérieures de montage de moule (6, 7, 63, 64) s'appuyant de manière mobile dans le châssis de machine (5, 54) et étant reliées entre elles en position de fermeture du dispositif de fermeture de moule par des colonnes (21),
**caractérisé en ce que**
il est prévu comme châssis porteur (19, 53) un châssis porteur (19, 53) en forme de C pourvu d'un orifice orienté vers le côté utilisateur de la machine de moulage par injection.

2. Dispositif de fermeture de moule selon la revendication 1,
**caractérisé en ce que**
le châssis porteur (19, 53) comporte une branche horizontale supérieure (19a, 53a) et inférieure (19c, 53c) ainsi qu'une pièce verticale de châssis porteur (19b, 53b) reliant entre elles ces branches (19a, 19c, 53a, 53c) et circonscrivant avec celles-ci respectivement un angle droit.

3. Dispositif de fermeture de moule selon la revendication 1 ou 2,
**caractérisé en ce que**
le châssis porteur (19, 53) comporte une branche horizontale inférieure (19c, 53c) s'appuyant sur le châssis de machine (5, 54).

4. Dispositif de fermeture de moule selon une des revendications 1 à 3,
**caractérisé en ce que**
le châssis porteur (19, 53) est traversé au niveau de ses deux branches horizontales (19a, 19c, 53a, 53c) respectivement par deux colonnes (21, 62) dans des guides de coulissement qui relient entres elles les deux plaques extérieures de montage de moule (6, 7, 63, 64).

5. Dispositif de fermeture de moule selon une des revendications 1 à 4,
**caractérisé en ce que**,
entre le châssis porteur (19, 53) fixe sur la machine et les deux plaques extérieures de montage de moule (6, 7, 63, 64), sont disposés des actionneurs (27, 28, 73) pour exécuter les mouvements d'ouverture et de fermeture.

6. Dispositif de fermeture de moule selon une des revendications 1 à 5,
**caractérisé en ce que**
l'élément porteur de moule (13) est réalisé en forme de plaque avec deux surfaces de montage de moule pour deux demi-moules centraux (16, 17).

7. Dispositif de fermeture de moule selon une des revendications 1 à 5,
**caractérisé en ce que**
l'élément porteur de moule (13) est réalisé en forme de cube avec quatre surfaces de montage de moule pour quatre demi-moules centraux (56, 57, 58, 59).

8. Dispositif de fermeture de moule selon une des revendications 1 à 7,
**caractérisé en ce que**
au moins un dispositif d'usinage est prévu pour réaliser des étapes d'usinage sur la pièce fabriquée se trouvant dans le demi-moule qui est orienté vers l'ouverture du châssis porteur en forme de C (19, 53).

9. Dispositif de fermeture de moule selon une des revendications 1 à 8,
**caractérisé en ce que**,
sur le châssis porteur (19, 53) sont disposés un ou plusieurs agrégats d'injection (4) et/ou dispositifs RIM qui peuvent être amenés en liaison d'injection avec un ou plusieurs demi-moules fixés sur l'élément porteur de moule (13, 55).
